# EUROPEAN PATENT SPECIFICATION

(11) **EP 2 719 588 B1**
(45) Date of publication and mention of the grant of the patent: **23.12.2020**
(21) Application number: 12188589.1
(22) Date of filing: 15.10.2012
(51) Int. Cl.: B60T 7/12, B60T 13/66, B60T 17/18

(54) **METHOD FOR OPERATING AN ELECTRICALLY OPERABLE PARKING BRAKE SYSTEM AND CONTROL DEVICE OF AN ELECTRICALLY OPERABLE PARKING BRAKE SYSTEM**
VERFAHREN FÜR DEN BETRIEB EINES ELEKTRISCH BETÄTIGTEN PARKBREMSSYSTEMS UND STEUERVORRICHTUNG EINES ELEKTRISCH BETÄTIGTEN PARKBREMSSYSTEMS
PROCÉDÉ DE FONCTIONNEMENT D'UN SYSTÈME DE FREIN DE STATIONNEMENT À COMMANDE ÉLECTRIQUE ET DISPOSITIF DE COMMANDE D'UN SYSTÈME DE FREIN DE STATIONNEMENT ACTIONNABLE ÉLECTRIQUEMENT

(43) Date of publication of application: 16.04.2014
(73) Proprietor: KNORR-BREMSE Systeme für Nutzfahrzeuge GmbH, 80809 München (DE)
(72) Inventor: Balogh, Levente, 2319 Szigetszentmiklos (HU); Bordacs, Zoltan, 8200 Veszprém (HU)
(74) Representative: Mattusch, Gundula

(56) References cited:
- DE-A1- 10 357 121
- DE-A1-102007 026 223
- DE-A1-102008 034 915
- DE-A1-102009 046 495

## Description

The present invention relates to a method for operating an electrically operable parking brake system of a vehicle.

The present invention further relates to a control device for an electrically operable parking brake system, wherein the control device is designed for implementing the method according to the invention.

Vehicles, for example, utility vehicles, generally possess a service brake used for braking during a driving operation of the vehicle and a parking brake system independent of the service brake which secures the vehicle by applying a braking force in the parked state. The service brake and the parking brake system may, conceptually, be referred to as the brake system of the vehicle. In modern vehicles, the service brake as well as the parking brake system are often electrically operable. Accordingly, for example, signals generated by operating devices are transmitted to control devices of the service brake and the parking brake system which in turn control the operation, i.e., in particular, the release and the application, of the service brake and of the parking brake system. In their respective released operating states, the service brake and the parking brake system do not generate a braking force. In their respective applied operating states, the service brake and the parking brake system respectively generate a braking force. A released brake can often also be referred to as "open" and an applied brake as "closed".

Usually, a change between a phase in which the service brake is operated and a phase in which the parking brake system is operated takes place when starting or stopping. It is the responsibility of the driver of the vehicle to release the parking brake system by manually operating an operating device provided for this purpose when starting the vehicle in order to be capable of starting without causing significant wear or damage.

Even though the release of the parking brake system is normally routinely done by the driver, it is still an additional action to be explicitly performed by the driver which at least briefly requires his attention. During the release of the parking brake system, the driver is thus distracted at least for a short period of time.

A method according to the generic part of independent claim 1 is known from DE 103 57 121 A1 and DE 10 2009 046 495 A1.

The present invention unburdens the driver in order to thereby enhance the driving safety and to reduces wear.

It is an object of the present invention to provide a more comfortable start.

Said object is solved by the features of the independent claims.

Advantageous embodiments and further developments emerge from the dependent claims.

According to the invention, a transfer of the electrically operable parking brake system from an applied operating state into a released operating state is initiated when the presence of a starting condition is detected which is independent of an operating device provided for manually operating the electrically operable parking brake system. In this way, the driver of the vehicle may be released/relieved from the task of manually releasing the parking brake system when starting the vehicle. Therefore, the driver of the vehicle may primarily concentrate on the current traffic situation surrounding him, as his attention is not directed to the manual operation of the operating device provided for releasing the parking brake system. Further, damage to the parking brake system due to additional wear resulting from an unintentionally forgotten manual release of the parking brake system while starting can be prevented. The vehicle may, in particular, be or comprise a towing vehicle.

In this connection, it may be contemplated that the starting condition comprises at least one of the following conditions:
- the driver is present,
- the engine is running,
- the vehicle is standing,
- a gear is engaged,
- the cabin door of the vehicle is closed,
- the accelerator and/or clutch pedal is operated.

The above conditions may be used for the detection of a starting condition either independent of each other or in any combination. For example, it may be assumed that the driver of the vehicle wishes to start when the vehicle is standing with the engine running, a gear is engaged, and the accelerator pedal is operated.

Advantageously, it may be contemplated that the presence of the driver is detected via at least one of the following conditions:
- a seat switch indicates the driver's mass,
- an internal cabin camera indicates that the driver is in the driver seat,
- an accelerator or brake or clutch pedal is operated.

These conditions are all sure evidences for the presence of the driver.

It is contemplated that applying a service brake of the vehicle is requested by the parking brake system. By applying the service brake, the vehicle may be held in a secured state even after the parking brake system is released, and in doing so, the application of the service brake may be effected prior to the release of the parking brake system. Following the application of the service brake, the service brake may be released again. In this way, the release of the parking brake system may be effected in a plurality of stages involving the service brake, whereby a less abrupt reduction of the braking forces securing the vehicle can be ensured. A more comfortable start may thus be ensured.

It may be contemplated that an implementation of the method is interrupted if at least one of the following events is detected:
- starting condition not met,
- operation of the operating device,
- presence of the driver not ensured,
- no or incorrect response of a service brake,
- deactivation of the ignition,
- engine is off.

The incidents listed above may lead to an interruption of the execution of the method individually and/or in any combination. In this way, an initiated release of the parking brake system may be interrupted if, prior to an final release of the brake system of the vehicle, i.e., a vehicle that will not automatically be secured by a braking force, it is doubtful whether the release of the parking brake system is to be actually effected due to a currently existing desire of the driver to start. Further, an inaccurate communication between the service brake and the parking brake system can be taken into consideration so that an uncontrolled release of the parking brake system may be prevented. The interruption may lead to a suspension of the implementation of the method, wherein the method is retained in a defined method-interrupted-state until it is continued or terminated.

Advantageously, it may be contemplated that the execution of the method is continued if at least of one of the following events is detected:
- starting condition is fulfilled again,
- presence of the driver is ensured again,
- reception of an external instruction to continue the method.

The above events may enable the continuation of the implementation of the previously interrupted method individually as well as in any combination. If a continuation of the implementation of the method takes place, the method will - starting from the defined method-interrupted-state - be continued with the step of the procedure at which it was initially interrupted. The external instruction to continue the method may, in particular, be generated by the ECU of the service brake.

It may further be contemplated that the implementation of the method is terminated if at least one of the following events is detected:
- opening a cabin door of the vehicle,
- feedback from the service brake is incorrect or missing,
- receipt of an external instruction to terminate the method.

The incidents mentioned above may result in the termination of the previously implemented method either individually as well as in any combination. In this connection, a restart of the method is either possible or not possible depending on the event. In the case of an incorrect or missing feedback of the service brake, for example, a restart of the method may be prevented, as it may be assumed that a defect exists which must be repaired before the method can be reasonably and/or successfully implemented. The receipt of an external instruction to cancel the method may also prevent the restart of the method, for example, during a service operation or in the case of a defect of another vehicle system. The restart of the method may, for example, be prevented by saving a system parameter considered by the control device implementing the method.

It may be contemplated that a signal is output prior to/during the termination and/or the interruption of the method. The output signal may comprise optical and/or acoustic components. For example, the signal may comprise an acoustic signal and/or a change of a light signal and/or a written/symbolic output on a display of a display unit in the vehicle interior. In this way, for example, the attention of driver of the vehicle may be drawn to the fact that the automatic release of the parking brake system cannot be accomplished at the present time. Various signals may be contemplated for the termination and/or the interruption. Further, another signal may be provided to draw the driver's attention to the fact that a restart of the method is prevented, for example, in the case of a defect. The other signal may also comprise the above-mentioned components and/or differ from the above-mentioned signals.

Further, it may be contemplated that the method is terminated if the release of the service brake is confirmed. After the release of the service brake, the vehicle is in the desired state with both the parking brake system and the service brake released.

In addition, it may also be contemplated that the electrically operable parking brake system is retained in the applied operating state or transferred into the applied operating state when the starting condition is not or is no longer detected. In this way, it may be ensured that the vehicle is always in a secured operating state when the starting condition is not present or is no longer present during the implementation of the method.

Usefully, it may be contemplated that a transfer of the electrically operable parking brake system from the applied operating state to the released operating state is initiated and a predeterminable waiting time is started if a defect in the electrically operable parking brake system is detected and the presence of another starting condition is identified independent of the operating device provided for manually operating the electrically operable parking brake system. In this way, the release of the parking brake system may be enabled when bypassing the operating device in the case of an identified defect of the parking brake system, particularly, in the case of a defect of the operating device provided for a manual operation and of an interface between the operating device and a control device of the parking brake system. The release of the parking brake system may be directly effected without an intermediate application and release of the service brake. A release speed of the parking brake system which may serve as a factor for determining the perceived comfort may be preset/fine tuned based on parameters.

In this connection, it may be contemplated that the additional starting condition comprises at least one the following events:
- engine is running,
- accelerator pedal is operated,
- engine rotation speed exceeds a predeterminable threshold value,
- engine torque exceeds another predeterminable threshold value,
- cabin door of the vehicle is closed,
- gear is engaged.

The abovementioned conditions may be suitable for at least partly defining the further starting conditions individually as well as in any combination.

Further, it may be contemplated that the electrically operable parking brake system is transferred into the released operating state after the expiry of the predeterminable waiting time if the further starting condition is identified in the course of the predeterminable waiting time. In this connection, the presence of the further starting condition may be verified, particularly at the start and during the process, i.e., when the predeterminable waiting time ends. In addition, the presence of the starting condition may be additionally or continuously verified as required while the predeterminable waiting time expires. In this way, it may be ensured that the driver of the vehicle actually consciously intents to release the parking brake system in the case of the presence of a defect, particularly in the case of a malfunctioning operating device and/or of a malfunctioning interface, by bypassing the operating device and the interface between the operating device and the control device.

Usefully, it may be contemplated that the predeterminable waiting time is reset and/or stopped when the further starting condition is no longer detected before the predeterminable waiting time has expired. In this way, it may be prevented that a careless act of the driver of the vehicle results in an accidental release of the parking brake system which was not at all intended.

The invention will now be described by way of example with the aid of preferred embodiments with reference to the accompanying drawings in which:
- Figure 1: shows a flow chart of a method;
- Figure 2: shows a flow chart of a modified method;
- Figure 3: shows an exemplary circuit diagram of an electrically operable parking brake system; and
- Figure 4: shows a schematic representation of a vehicle.

In the following figures, the same numerals designate identical or equivalent parts. The incidents, conditions, and similar situations described below may be regularly detected by sensors provided in the vehicle.

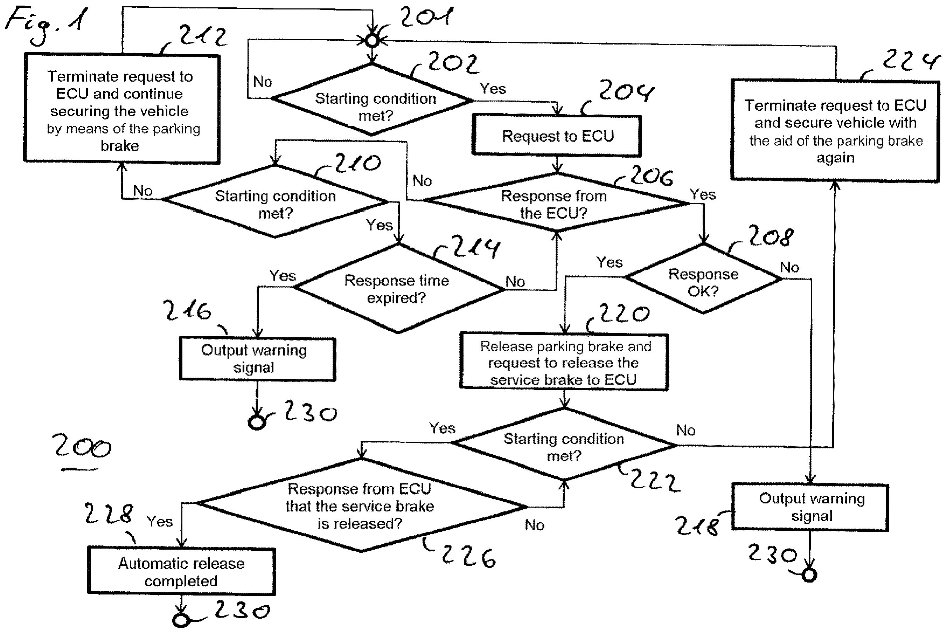

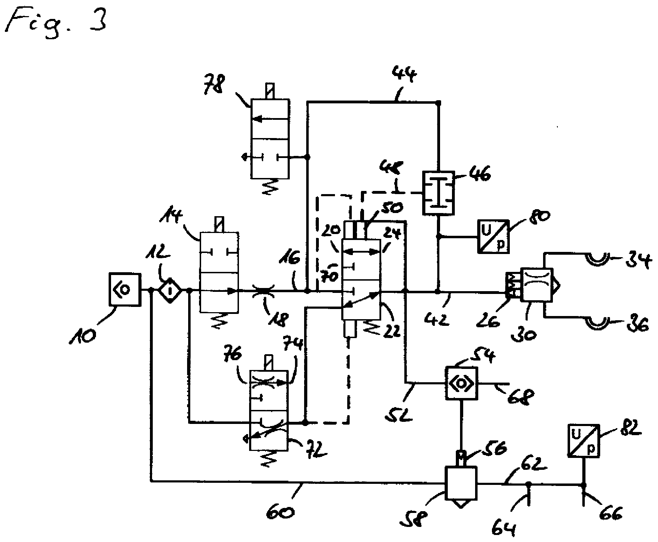

Figure 1 shows a flow chart of a method. The method 200 illustrated in Figure 1 may be capable of transferring an electrically operable parking brake system from an applied operating state into a released operating state. The method 200 may, for example, be implemented by a control device of the electrically operable parking brake system. The method 200 illustrated in Figure 1 may, for example, start or be started with Step 201. In Step 201, for example, the conditions which may be required for the implementation of the method 200 may be checked. For example, it may be checked whether a system parameter is set which prevents an implementation or a start of the method 200. Further, a check for detected defects may be implemented, when possible. If a defect is detected, for example, a modified method shown in Figure 3 may be started. Starting with the start in Step 201, it may be checked in Step 202 whether a starting condition is fulfilled. The starting condition may comprise a verification whether an engine of the vehicle, in particular, a drive engine, is running, whether the vehicle is standing, whether a gear is engaged, whether a cabin door of the vehicle is closed, or whether an accelerator and/or clutch pedal is operated. The check may be implemented with aid of the sensors to be provided in the vehicle. If the starting condition is not fulfilled - NO in Step 202 - the method may be restarted in Step 201. When the starting condition is fulfilled - YES in Step 202 - the process may be continued with Step 204. In Step 204, a request may be sent to an ECU. The ECU may, in particular, be a control device of a service brake. The request may, for example, comprise a general confirmation of the serviceability of the service brake and an instruction to apply the service brake. In this way, it may, for example, be ensured that the parking brake system is not released if the operating pressure of the service brake is not high enough. When the request is sent to the ECU, a predeterminable response time period may begin during which the outstanding response of the ECU to the request is awaited. Starting from Step 204, the process may be continued with Step 206. In Step 206, it may be checked whether the ECU has responded to the request of Step 204. If the response of the ECU has been received - YES in Step 206 - the process may be continued with Step 208. If the response of the ECU is not present - NO in Step 206 - the process may be continued with Step 210. In Step 208, it may be checked whether the response of the ECU is correct. If the response of the ECU is not correct - NO in Step 208 - the process may be continued with Step 218. If the response of the ECU is correct - YES in Step 208 - the process may be continued with Step 220. An incorrect response may, for example, occur in the case of an impaired or interrupted connection between a control device executing the method 200 and the ECU, i.e., the control device of the service brake, for example. An incorrect response is also possible in the case of a defect of the ECU and/or a defect of the service brake. Therefore, the term incorrect may, within the framework of the present application, be understood to be inconsistent with an expected response.

In Step 210, it may be rechecked whether the starting condition is fulfilled or not yet fulfilled. If the starting condition is not fulfilled - NO in Step 210 - the process may be continued with Step 212. If the starting condition is fulfilled - YES in Step 210 - the process may be continued with Step 214. In Step 212, the request sent to the ECU in Step 204 may be terminated, and the vehicle may further be secured with the aid of the parking brake system. Starting from Step 212, the method 200 may be restarted in Step 201. In Step 214, it may be checked whether the predeterminable response time started in Step 204 has already expired. If the response time has not yet expired - NO in Step 214 - the process may be continued with Step 206. If the response time has already expired - YES in Step 214 - the process may be continued with Step 216. In Step 216, an alarm signal may be output which may draw the driver's attention to the fact that the request sent to the ECU in Step 204 was not answered within the predeterminable response time. The absence of the response of the ECU may indicate a defect preventing the regular implementation of the method 200. In Step 216, a system parameter may be set which prevents a later restart of the method 200 because of an assumed defect. The alarm signal output in Step 216 may comprise a plurality of components. For example, the alarm signal may be acoustic and/or visual and, in particular, comprise an acoustic signal and/or the flashing of a warning light and/or a written notification on a display of an on-board computer. The output alarm signal may notify the driver of the occurred/assumed defect. Starting from Step 216, the process may be continued with Step 230.

Analogous to Step 216, an alarm signal which may notify the driver of the vehicle of the fact that a response expected from the ECU is incorrect, for example, abnormal, may also be output in Step 218. This may also indicate a defect. The alarm signal output in Step 218 may have a form analogous to the alarm signal already known from Step 216. In Step 218, a system parameter may be set which prevents a later restart of the method 200 because of an assumed defect. Starting from Step 218, the process may also be continued with Step 230. If the response expected from the ECU is correct - YES in Step 208 - the parking brake system may first be released, i.e., opened in Step 220, and a request may then be sent to the ECU so that the service brake which was applied as a result of the request of Step 204 is released. Thereafter, the process may be continued with Step 222. In Step 222, the starting condition already known from Steps 202 and 210 may be rechecked. If the starting condition is not fulfilled - NO in Step 222 - the process may be continued with Step 224. If the starting condition is fulfilled - YES in Step 222 - the process may be continued with Step 226. In Step 224, the request to release the service brake output to the ECU in Step 220 may be terminated, and the parking brake system may be applied again to permanently ensure a safe operating state of the vehicle. Following Step 224, the method 200 may be restarted in Step 201. In Step 226, it may be checked, based upon an expected response from the ECU, whether the service brake is released. If the expected response from the ECU indicating that the service brake is released has not been received - NO in Step 226 - the process may return to Step 222. If the response of the ECU is present - YES in Step 226 - the process may be continued with Step 228. It is possible that an additional response time is provided analogous to the response time known from Step 204 for the response of the ECU indicating that the service brake is released. If the additional response time has expired without the response from the ECU, the process may then also be continued with Step 224. In Step 228, it may be established that the automatic release of the parking brake system is completed. The release of the parking brake system according to the method 200 may therefore comprise an intermediate application of the service brake to enable a less abrupt starting process which may be perceived as more comfortable and require less attention on the part of the driver. Starting from Step 228, the process may be continued with Step 230. In Step 230, the method may end. A restart of the method 200 in Step 201 after the completion of the method 200 in Step 230 may be possible if the required conditions, for example, a newly applied parking brake system, are fulfilled, and no system parameter which prevents a restart of the method 200 was set in the meantime. If required, the response time or the remaining response time may be visually and/or acoustically indicated to the driver, for example, in written form on a display of an on-board computer in the driver's cabin, a variable light signal, or a variable acoustic signal. Likewise the additional response time or the remaining additional response time may be visually and/or acoustically indicated to the driver, for example, on a display of an on-board computer in the driver's cabin, a variable light signal, or a variable acoustic signal, if required.

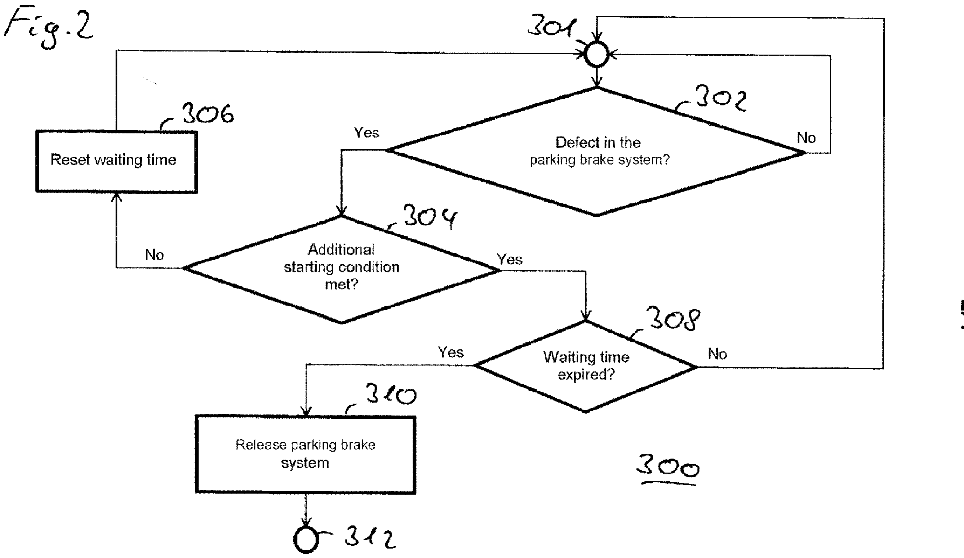

Figure 2 shows a flow chart of a modified method. The modified method 300 may, for example, start in Step 301. Starting from Step 301, it may first be checked in Step 302 whether a defect of the parking brake system, in particular, a defect of a control, i.e. of an operating device and/or of an interface between the operating device and a control device of the parking brake system, was/is detected. If this is not the case - NO in Step 302 - the modified method 300 may be restarted in Step 301. If a defect was/is detected - YES in Step 302 - an expiration of a predeterminable waiting time may be started or continued, and the process may be continued with Step 304. In Step 304 it may be checked whether a further starting condition is fulfilled. The further starting condition may comprise the operation of the engine, in particular, the drive engine, an operation of the accelerator pedal, an engine speed exceeding a predeterminable threshold value, an engine torque exceeding a further predeterminable threshold value, a closed cabin door of the vehicle and/or an engaged gear. The further starting condition may be detectable with the aid of sensors provided in the vehicle. If the further starting condition is not fulfilled - NO in Step 304 - the process may be continued with Step 306. If the further starting condition is fulfilled - YES in Step 304 - the process may be continued with Step 308. In Step 306, the predeterminable waiting time initially started in Step 302 may be reset. Starting from Step 306, the modified method 300 may be restarted in Step 301. In Step 308, it may be checked whether the predeterminable waiting time has expired. If the waiting time has not yet expired - NO in Step 308 - the process may be continued with Step 301. If the waiting time has already expired - YES in Step 308 - the process may be continued with Step 310. In Step 310, the parking brake system may be released. The method 300 may then end in Step 312.

The modified method 300 illustrated in Figure 2 may, for example, based upon the method 200 known from Figure 1, start in Step 301, for example, periodically or when a check of the required preconditions in Step 201 is unsuccessful. Prior to a restart of the modified method 300 in Step 301, an implementation of Step 201 of method 200 according to Figure 1 may be regularly provided, for example, to swap between the modified method 300 and method 200. If required, the waiting time or the remaining waiting time may be visually and/or acoustically indicated to the driver, for example, on a display of an on-board computer in the vehicle interior, a variable signal light, or a variable acoustic signal.

Figure 3 shows an exemplary circuit diagram of an electrically operable parking brake system. The illustrated electrically operable parking brake system 100 may be connected to a pressurised air processing system (not shown) via a non-return valve 10. The non-return valve 10 may be followed by an optional filter unit 12 through which the pressurised air may be supplied to a supply solenoid valve 14 which may be designed as a 2/2 directional valve. A first working connection 20 of a control valve device 22 may be connected to the outlet of the supply solenoid valve 14 via a supply line section 16 and an optional throttle 18. The control valve device 22 may be formed as a pneumatically controllable 3/2 directional valve. A second working connection 24 of the control valve device 22 may lead to a control inlet 26 of a trailer control module 30. It may operate a supply connection 34 and a control connection 36 of the trailer coupling. The trailer control line branches 42, 44 may be connected to inlets of a select low valve 46, the outlet of which may be connected to a control inlet 50 of the control valve device 22 via a control line 48. The select low valve 46 may operate so that the lower inlet pressure, i.e., the lower pressure from the two trailer control line branches 42, 44, is applied at its outlet, i.e., in the control line 48. The control line 48 may further be connected to a relay control inlet 56 of a relay valve 58 via a relay control line 52 and a shuttle valve 54. The relay valve 58 may be supplied with pressurised air from of a location upstream of the supply solenoid valve 14 via a relay supply line 60. A relay outlet line 62 may lead to branch lines 64, 66 to which spring energy store cylinders (not shown) may be connected. Further, a service brake line 68 may be connected to the shuttle valve 54. A connection 74 of a control and exhaust valve device 72 may be connected to a vent port 70 of the control valve device 22. Another port 76 of the control and exhaust valve device 72 may be supplied with pressurised air from a location between the filter unit 12 and the supply solenoid valve 14. Further, an exhaust solenoid valve 78 formed as a 2/2 directional valve may be provided which may be connected to the supply line section 16. Furthermore, pressure sensors 80, 82 for detecting the pressures at the second working connection 24 of the control valve device 22 as well as the relay outlet line 62 may be provided. The pressure sensor 80 may, for example, measure a shift pressure of the electrically operable parking brake system 100. A supply pressure of the electrically operable parking brake system 100 may, for example, be detected by a pressure sensor (not shown) between the non-return valve 10 and the filter unit 12.

The electrically operable parking brake system 100 illustrated in Figure 3 may further comprise a first control device not shown in this figure and a manual operating device which is also not shown. The operating device may be connected to the first control device via an interface. The operating device may be designed for manually releasing and applying the parking brake system 100 as well as for manually implementing a trailer test function.

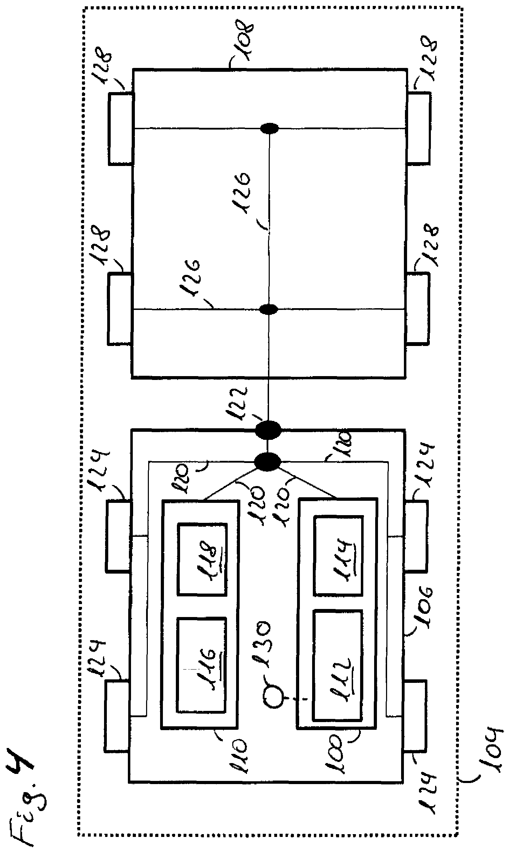

Figure 4 shows a schematic representation of a vehicle. Figure 4 schematically shows the vehicle 104 which may comprise a towing vehicle 106 and a trailer 108. The vehicle 104 may comprise an electrically operable parking brake system 100 and a service brake 110. The electrically operable parking brake system 100 may, in turn, comprise a first control device 112 and an electrically operable valve array 114 which may be controllable by the first control device 112. The electrically operable valve array 114 may, for example, be connected to or identified with the circuit diagram shown in Figure 3. The electrically operable parking brake system 100 may be coupled to at least one wheel brake 124 on at least one axle of the towing vehicle 106 via a pneumatic line 120. Further, the electrically operable parking brake system 100 may be connected to a pneumatic trailer connection 122 via the pneumatic line 120. The pneumatic trailer connection 122 may be identified with the trailer control module 30 or the control connection 36. Analogously, the service brake 110 may comprise a second control device 116 and a valve array 118. Further, the service brake 110 may also be connected to the at least one wheel brake 124 and the pneumatic trailer connection 122 via the pneumatic lines 120. In this connection, it is clear for a person skilled in the art that the pneumatic line 120 only suggests the pneumatic couplings between the service brake 110, the electrically operable parking brake system 100, the pneumatic trailer connection 122, and the wheel brakes 124, as, for example, a combination cylinder located in the area of the at least one wheel brake 124 comprises two mutually independent pneumatic connections for the service brake 110 and the parking brake system which are independently coupled to the electrically operable parking brake system 100 and the service brake 110.

The trailer 108 may be pneumatically coupled to the trailer connection 122, wherein pneumatic control pressures may be transferred to at least one trailer wheel brake 128 of the trailer 108 via at least one pneumatic line 126. In connection with the at least one trailer wheel brake 128, combination cylinders may also be provided at least to some extent so that the at least one pneumatic line 126, analogous to the pneumatic lines 120 of the towing vehicle 106, may also illustrate existing couplings in a simplified manner.

The features of the invention disclosed in the above description, the drawings as well as the claims may be important for the realisation of the invention individually as well as in any combination.

### List of Numerals

- 10: non-return valve
- 12: filter unit
- 14: supply solenoid valve
- 16: supply line section
- 18: throttle
- 20: first working connection
- 22: control valve device
- 24: second working connection
- 26: control input
- 30: trailer control module
- 34: supply connection
- 36: control connection
- 42: trailer control line branch
- 44: trailer control line branch
- 46: select low valve
- 48: control line
- 50: control inlet
- 52: relay control line
- 54: shuttle valve
- 56: relay control inlet
- 58: relay valve
- 60: relay supply line
- 62: relay outlet line
- 64: branch line
- 66: branch line
- 68: service brake line
- 70: vent port
- 72: control and exhaust valve device
- 74: connection
- 76: connection
- 78: exhaust solenoid valve
- 80: pressure sensor
- 82: pressure sensor
- 100: electrically operable parking brake system
- 104: vehicle
- 106: towing vehicle
- 108: trailer
- 110: service brake
- 112: first control device
- 114: electrically operable valve array
- 116: second control device
- 118: valve array
- 120: pneumatic line
- 122: trailer connection
- 124: wheel brake
- 126: pneumatic line
- 128: trailer wheel brake
- 200: method
- 201: start
- 202: starting condition met?
- 204: request to ECU
- 206: response from the ECU?
- 208: response OK?
- 210: starting condition met?
- 212: terminate request to ECU and continue securing vehicle by means of the parking brake
- 214: response time expired?
- 216: output warning signal
- 218: output warning signal
- 220: release parking brake and request to release the service brake to ECU
- 222: starting condition met?
- 224: terminate request to ECU and secure vehicle with the aid of the parking brake again
- 226: response from ECU that the service brake is released?
- 228: automatic release completed?
- 230: end
- 300: modified method
- 301: start
- 302: defect in control of the parking brake?
- 304: starting condition met and confirmed?
- 306: reset waiting time
- 308: waiting time expired?
- 310: release parking brake
- 312: end

## Claims

1. A method (200) for operating an electrically operable parking brake system (100) of a vehicle (104), wherein a transfer of the electrically operable parking brake system (100) from an applied operating state into a released operating state is initiated when the presence of a starting condition is detected which is independent of an operating device (130) provided for manually operating the electrically operable parking brake system (100) and/or used to release the parking brake system (100) when the operating device (130) is faulty, **characterised in that** applying a service brake (110) of the vehicle (104) is requested by the parking brake system (100).

2. The method (200) according to claim 1, **characterised in that** the starting condition comprises at least one of the following conditions:
- driver is present,
- engine is running,
- vehicle (104) is standing,
- gear is engaged,
- cabin door of the vehicle (104) is closed,
- accelerator and/or clutch pedal is operated.

3. The method (200) according to claim 2, **characterized in that** the presence of the driver is detected via at least one of the following conditions:
- a seat switch indicates the driver's mass,
- an internal cabin camera indicates that the driver is in the driver seat,
- an accelerator or brake or clutch pedal is operated.

4. The method (200) according to one of the preceding claims, **characterised in that** an implementation of the method (200) is interrupted when at least one of the following events is detected:
- starting condition not fulfilled,
- operation of the operating device (130),
- presence of the driver not ensured,
- no or incorrect response of a service brake (110),
- deactivation of the ignition,
- engine is off.

5. The method (200) according to claim 4, **characterised in that** the implementation of the method (200) is continued when at least one of the following events is detected:
- starting condition is fulfilled again,
- presence of the driver is ensured again,
- receipt of an external instruction to continue the method.

6. The method (200) according to claim 4 or 5, **characterised in that** the implementation of the method (200) is terminated when at least one of the following incidents is detected:
- opening a cabin door of the vehicle (104),
- feedback from the service brake (110) is incorrect or missing,
- receipt of an external instruction to terminate the method.

7. The method (200) according to one of the claims 4 to 6, **characterised in that** a signal is output prior to/during the termination and/or interruption of the method (200).

8. The method (200) according to one of the preceding claims, **characterised in that** the method (200) is terminated when the release of the service brake (110) is confirmed.

9. The method (200) according to one of the preceding claims, **characterised in that** the electrically operable parking brake system (100) is retained in the applied operating state or transferred into the released operating state when the starting condition is not detected or is no longer detected.

10. The method (200) according to one of the preceding claims, **characterised in that** a transfer of the electrically operable parking brake system (100) from the applied operating state into the released operating state is initiated and a predeterminable waiting time is started when a defect in the electrically operable parking brake system (100) is detected and the presence of an additional starting condition is detected which is independent of the operating device (130) provided for manually operating the electrically operable parking brake system (100).

11. The method (200) according to claim 10, **characterised in that** the additional starting condition comprises at least one of the following incidents:
- engine is running,
- accelerator pedal is operated,
- engine rotation speed exceeds a predeterminable threshold value,
- engine torque exceeds a further predeterminable threshold value,
- cabin door of the vehicle (104) is closed,
- gear is engaged.

12. The method (200) according to claim 10 or 11, **characterised in that** the electrically operable parking brake system (100) is transferred into the released operating state after the expiry of the predeterminable waiting time when the additional starting condition is detected during the expiry of the predeterminable waiting time.

13. The method (200) according to one of the claims 10 to 12, **characterised in that** the predeterminable waiting time is reset and/or stopped when the additional starting condition is no longer detected before the predeterminable waiting time has expired.

14. A control device (112) of an electrically operable parking brake system (100) of a vehicle (104), wherein the control device (112) is designed for implementing a method (200) according to one of the preceding claims.

## Patentansprüche

1. Verfahren (200) zur Betätigung einer elektrisch betätigbaren Feststellbremsanlage (100) eines Fahrzeugs (104), wobei eine Versetzung der elektrisch betätigbaren Feststellbremsanlage (100) von einem angezogenen Betriebszustand in einen gelösten Betriebszustand eingeleitet wird, wenn das Vorliegen einer Startbedingung festgestelt wird, die unabhängig von einer Betätigungsvorrichtung (130) ist, die zur manuellen Betätigung der elektrisch betätigbaren Feststellbremsanlage (100) vorgesehen ist und/oder zum Lösen der Feststellbremsanlage (100) bei fehlerhafter Betätigungsvorrichtung (130) benutzt wird, **dadurch gekennzeichnet, dass** das Anziehen einer Betriebsbremse (110) des Fahrzeugs (104) von der Feststellbremsanlage (100) angefordert wird.

2. Verfahren (200) nach Anspruch 1, **dadurch gekennzeichnet, dass** die Startbedingung mindestens einen der folgenden Zustände umfasst:
- Fahrer anwesend,
- Motor läuft,
- Fahrzeug (104) steht,
- Gang eingelegt,
- Führerhaustür des Fahrzeugs (104) geschlossen,
- Gas- und/oder Kupplungspedal betätigt.

3. Verfahren (200) nach Anspruch 1, **dadurch gekennzeichnet, dass** die Anwesenheit des Fahrers über mindestens einen der folgenden Zustände festgestellt wird:
- ein Sitzschalter zeigt die Masse des Fahrers an,
- eine Kamera im Führerhaus zeigt an, dass der Fahrer im Fahrersitz ist,
- ein Gas- oder Brems- oder Kupplungspedal ist betätigt.

4. Verfahren (200) nach einem der vorhergehenden Ansprüche, **dadurch gekennzeichnet, dass** eine Durchführung des Verfahrens (200) unterbrochen wird, wenn mindestens einer der folgenden Zustände festgestellt wird:
- Startbedingung nicht erfüllt,
- Betätigung der Betätigungsvorrichtung (130),
- Anwesenheit des Fahrers nicht sichergestellt,
- kein oder falsches Ansprechen einer Betriebsbremse (110)
- Abschalten der Zündung,
- Motor ausgeschaltet.

5. Verfahren (200) nach Anspruch 4, **dadurch gekennzeichnet, dass** die Durchführung des Verfahrens (200) fortgesetzt wird, wenn mindestens einer der folgenden Zustände festgestellt wird:
- Startbedingung wieder erfüllt,
- Anwesenheit des Fahrers wieder sichergestellt,
- Empfang einer externen Anweisung zur Fortsetzung des Verfahrens.

6. Verfahren (200) nach Anspruch 4 oder 5, **dadurch gekennzeichnet, dass** die Durchführung des Verfahrens (200) abgeschlossen wird, wenn mindestens einer der folgenden Zustände festgestellt wird:
- Öffnen einer Führerhaustür des Fahrzeugs (104),
- Feedback von der Betriebsbremse (110) falsch oder ausgefallen,
- Empfang einer externen Anweisung zum Abschluss des Verfahrens.

7. Verfahren (200) nach einem der Ansprüche 4 bis 6, **dadurch gekennzeichnet, dass** vor dem Abschluss/während des Abschlusses und/oder vor der Unterbrechung/während der Unterbrechung des Verfahrens (200) ein Signal ausgegeben wird.

8. Verfahren (200) nach einem der vorhergehenden Ansprüche, **dadurch gekennzeichnet, dass** das Verfahren (200) abgeschlossen wird, wenn die Lösung der Betriebsbremse (110) bestätigt wird.

9. Verfahren (200) nach einem der vorhergehenden Ansprüche, **dadurch gekennzeichnet, dass** die elektrisch betätigbare Feststellbremsanlage (100) im angezogenen Betriebszustand gehalten wird oder in den gelösten Betriebszustand versetzt wird, wenn die Startbedingung nicht oder nicht mehr festegestellt wird.

10. Verfahren (200) nach einem der vorhergehenden Ansprüche, **dadurch gekennzeichnet, dass** eine Versetzung der elektrisch betätigbaren Feststellbremsanlage (100) aus dem angezogenen Betriebszustand in den gelösten Betriebszustand eingeleitet wird und eine vorgebbare Wartezeit beginnt, wenn ein Fehler in der elektrisch betätigbaren Feststellbremsanlage (100) festgestellt wird und das Vorliegen einer zusätzlichen Startbedingung festgestelt wird, die unabhängig von der Betätigungsvorrichtung (130) ist, die zur manuellen Betätigung der elektrisch betätigbaren Feststellbremsanlage (100) vorgesehen ist.

11. Verfahren (200) nach Anspruch 10, **dadurch gekennzeichnet, dass** die zusätzliche Startbedingung mindestens einen der folgenden Vorfälle umfasst:
- Motor läuft,
- Gaspedal betätigt,
- Motordrehzahl über einem vorgebbaren Schwellenwert,
- Motordrehmoment über einem weiteren vorgebbaren Schwellenwert,
- Führerhaustür des Fahrzeugs (104) geschlossen,
- Gang eingelegt.

12. Verfahren (200) nach Anspruch 10 oder 11, **dadurch gekennzeichnet, dass** die elektrisch betätigbare Feststellbremsanlage (100) nach Ablauf der vorgebbaren Wartezeit in den gelösten Betriebszustand versetzt wird, wenn die zusätzliche Startbedingung während des Ablaufs der vorgebbaren Wartezeit festgestellt wird.

13. Verfahren (200) nach einem der Ansprüche 10 bis 12, **dadurch gekennzeichnet, dass** die vorgebbare Wartezeit rückgestellt und/oder gestoppt wird, wenn die zusätzliche Startbedingung vor Ablauf der vorgebbaren Wartezeit nicht mehr festgestellt wird.

14. Steuervorrichtung (112) einer elektrisch betätigbaren Feststellbremsanlage (100) eines Fahrzeugs (104), wobei die Steuervorrichtung (112) zur Durchführung eines Verfahrens (200) nach einem der vorhergehenden Ansprüche ausgelegt ist.

## Revendications

1. Procédé (200) pour faire fonctionner un système (100) de frein de stationnement, pouvant fonctionner électriquement, d'un véhicule (104), dans lequel on fait commencer un passage du système de frein de stationnement, pouvant fonctionner électriquement, d'un état de fonctionnement serré à un état de fonctionnement desserré, lorsque l'on détecte la présence d'une condition de démarrage, qui est indépendante d'un dispositif (130) de fonctionnement prévu pour faire fonctionner manuellement le système (10) de frein de stationnement pouvant fonctionner électriquement et/ou utilisé pour desserrer le système (100) de frein de stationnement, lorsque le dispositif (130) de fonctionnement est défectueux, **caractérisé en ce que** serrer un frein (110) de service du véhicule (104) est demandé par le système (100) de frein de stationnement.

2. Procédé (200) suivant la revendication 1, **caractérisé en ce que** la condition de démarrage comprend au moins l'une des conditions suivantes :
- un conducteur est présent,
- le moteur tourne,
- le véhicule (104) est en stationnement,
- une vitesse est enclenchée,
- la portière de la cabine du véhicule (104) est fermée,
- on fait fonctionner la pédale de l'accélérateur et/ou de l'embrayage.

3. Procédé (200) suivant la revendication 2, **caractérisé en ce que** l'on détecte la présence du conducteur par au moins l'une des conditions suivantes :
- un interrupteur de siège indique la masse du conducteur,
- une caméra dans la cabine indique que le conducteur est dans le siège du conducteur,
- on fait fonctionner la pédale de l'accélérateur ou de frein ou de l'embrayage.

4. Procédé (200) suivant l'une des revendications précédentes, **caractérisé en ce que** l'on interrompt une mise en œuvre du procédé (200) lorsque l'on détecte au moins des événements suivants :
- une condition de démarrage n'est pas satisfaite,
- fonctionnement du dispositif (130) de fonctionnement,
- la présence du conducteur n'est pas assurée,
- pas de réaction ou réaction incorrecte d'un frein (110) de service,
- désactivation d'allumage,
- le moteur est arrêté.

5. Procédé (200) suivant la revendication 4, **caractérisé en ce que** l'on continue à mettre en œuvre le procédé lorsque l'on détecte au moins l'un des événements suivants :
- la condition de démarrage est satisfaite à nouveau,
- la présence du conducteur est assurée à nouveau,
- on reçoit une instruction extérieure de continuer le procédé.

6. Procédé (200) suivant la revendication 4 ou 5, **caractérisé en ce que** l'on met fin à la mise en œuvre du procédé (200) lorsque l'on détecte au moins l'un des incidents suivants :
- ouverture d'une portière de cabine du véhicule (104),
- la réaction du frein (110) de service est incorrecte ou manque,
- on reçoit une instruction extérieure de mettre fin au procédé.

7. Procédé (200) suivant l'une des revendications 4 à 6, **caractérisé en ce qu'**un signal est sorti avant/pendant que l'on met fin et/ou que l'on interrompt le procédé (200).

8. Procédé (200) suivant l'une des revendications précédentes, **caractérisé en ce que** l'on met fin au procédé (200) lorsque le desserrage du frein (110) de service est confirmé.

9. Procédé (200) suivant l'une des revendications précédentes, **caractérisé en ce que** l'on retient le système (100) de frein de stationnement pouvant fonctionner électrique dans l'état de fonctionnement serré ou on le fait passer à l'état de fonctionnement desserré lorsque l'on ne détecte pas la condition de démarrage ou lorsque l'on ne la détecte plus.

10. Procédé (200) suivant l'une des revendications précédentes, **caractérisé en ce que** l'on fait commencer un passage du système (100) de frein de stationnement, pouvant fonctionner électriquement, de l'état de fonctionnement serré à l'état de fonctionnement desserré et on fait commencer un état d'attente pouvant être déterminé lorsque l'on détecte un défaut dans le système (100) de frein de stationnement pouvant fonctionner électriquement et lorsque l'on détecte la présence d'une condition de démarrage supplémentaire, qui est indépendante du dispositif (130) de fonctionnement prévu pour faire fonctionner manuellement le système (100) de frein de stationnement pouvant fonctionner électriquement.

11. Procédé (200) suivant la revendication 10, **caractérisé en ce que** la condition de démarrage supplémentaire comprend au moins l'un des incidents suivants :
- le moteur tourne,
- on fait fonctionner la pédale d'accélérateur,
- la vitesse de rotation du moteur dépasse une valeur de seuil pouvant être déterminée à l'avance,
- le couple du moteur dépasse une autre valeur de seuil pouvant être déterminée à l'avance,
- la porte de la cabine du véhicule (104) est fermée,
- une vitesse est enclenchée.

12. Procédé (200) suivant la revendication 10 ou 11, **caractérisé en ce que** l'on fait passer le système (100) de frein de stationnement pouvant fonctionner électriquement dans l'état de fonctionnement desserré à l'expiration d'un temps d'attente pouvant être déterminé à l'avance, lorsque l'on détecte la condition de démarrage supplémentaire pendant l'expiration du temps d'attente pouvant être déterminé à l'avance.

13. Procédé (200) suivant l'une des revendications 10 à 12, **caractérisé en ce que** l'on remet à zéro et/ou arrête le temps d'attente pouvant être déterminé à l'avance lorsque l'on ne détecte plus la condition de démarrage supplémentaire, avant l'expiration du temps d'attente pouvant être déterminé à l'avance.

14. Dispositif (112) de commande d'un système (100) de frein de stationnement pouvant fonctionner électriquement d'un véhicule (104) lorsque le dispositif (112) de commande est conçu pour mettre en œuvre un procédé (200) suivant l'une des revendications précédentes.
